# EUROPÄISCHE PATENTSCHRIFT

(11) **EP 4 552 305 B1**
(45) Veröffentlichungstag und Bekanntmachung des Hinweises auf die Patenterteilung: **20.05.2026**
(21) Anmeldenummer: 23740952.9
(22) Anmeldetag: 03.07.2023
(51) Int. Cl.: H04L 67/12, G08G 1/16, B60W 30/08

(54) **COMPUTERIMPLEMENTIERTES VERFAHREN UND STEUERGERÄT ZUM BESTIMMEN EINES GEFORDERTEN SICHERHEITSINTEGRITÄTSNIVEAUS SICHERHEITSBEZOGENER FAHRZEUGFUNKTIONEN**
COMPUTER-IMPLEMENTED METHOD AND CONTROLLER FOR DETERMINING A REQUIRED SAFETY INTEGRITY LEVEL FOR SAFETY-RELATED VEHICLE FUNCTIONS
PROCÉDÉ MIS EN OEUVRE PAR ORDINATEUR ET COMMANDE POUR DÉTERMINER UN NIVEAU D'INTÉGRITÉ DE SÉCURITÉ REQUIS POUR LES FONCTIONS DU VÉHICULE LIÉES À LA SÉCURITÉ

(30) Priorität: 06.07.2022 DE 102022206924
(43) Veröffentlichungstag der Anmeldung: 14.05.2025
(73) Patentinhaber: Robert Bosch GmbH, 70442 Stuttgart (DE)
(72) Erfinder: HEYL, Andreas, 71263 Weil Der Stadt (DE)
(86) Internationale Anmeldenummer: PCT/EP2023/068180
(87) Internationale Veröffentlichungsnummer: WO 2024/008623

(56) Entgegenhaltungen:
- DE-A1- 102019 218 078
- US-B1- 7 102 496

## Beschreibung

Die Erfindung betrifft ein computerimplementiertes Verfahren zum Bestimmen eines geforderten Sicherheitsintegritätsniveaus sicherheitsbezogener Fahrzeugfunktionen eines eine Mehrzahl sicherheitsbezogener Fahrzeugfunktionen aufweisenden Umfeldmodells.

Des Weiteren betrifft die Erfindung ein Steuergerät zum Bestimmen eines geforderten Sicherheitsintegritätsniveaus sicherheitsbezogener Fahrzeugfunktionen eines eine Mehrzahl sicherheitsbezogener Fahrzeugfunktionen aufweisenden Umfeldmodells.

Sicherheitsnormen wie die ISO 26262 beschreiben das empfohlene Vorgehen zur Entwicklung von sicherheitsbezogenen Funktionen. Ein erster Schritt ist hierbei die Bestimmung der Sicherheitsintegrität von Funktionen auf Basis einer Risikoanalyse, z.B. der Hazard Analysis and Risk Assessment (HARA) in der ISO 26262. Diese erfolgt während der Entwicklungszeit auf Basis von Annahmen über den Einsatz der Funktion bzw. des Systems, das die betreffende Funktion enthält.

In der ISO 26262 erfolgt das z.B. über die Parameter einer Auftretenswahrscheinlichkeit einer Situation, in der eine Fehlfunktion gefährlich sein könnte, einer möglichen Kontrollierbarkeit dieser Fehlfunktion und einer Schwere der Auswirkung, falls diese Fehlfunktion in dieser Situation nicht kontrolliert werden kann. Die Bewertung ergibt dann ein notwendiges Sicherheitsintegritätsniveau (z.B. ASIL) einer Funktion, auf Basis dessen die notwendigen Entwicklungsprozesse und Sicherheitsmechanismen aus der Sicherheitsnorm abgeleitet werden.

Daraus ergeben sich sowohl anzuwendende Design- und Testmethoden für die Hardware und Software, als auch notwendige ASIL-Compliance von Hardware Komponenten, auf denen die sicherheitsbezogene Software später läuft, die z.B. durch umfangreiche Diagnosen und die Bereitstellung von Hardware-Redundanzen erreicht werden kann.

DE 102015200422 A1 offenbart ein Fahrzeugsteuerungs- und Berechnungssystem, umfassend eine Aufgabensteuerung im Fahrzeug, einen fahrzeugspezifischen Berechnungsmanager in einem Cloud-Netzwerk und einen drahtlosen Datenkanal, der die Aufgabensteuerung und das Cloud-Netzwerk koppelt, wobei die Aufgabensteuerung Betriebsaufgaben im Fahrzeug mittels datenbezogener Ressourcen in dem Cloud-Netzwerk durchführt, wobei bei Initiierung einer der Betriebsaufgaben die Aufgabensteuerung ein Austausch-Signal an den Berechnungsmanager als Ressourcenanforderung sendet, wobei der Berechnungsmanager mindestens einen Cloud-basierten Agenten aus einer Datenbank vorbestimmter Agenten als Reaktion auf das Austausch-Signal aufruft, und wobei die Aufgabensteuerung die Betriebsaufgabe durch Kommunikation mit dem aufgerufenen Agenten vollendet.

DE 102019214453 A1 offenbart ein Verfahren zum sicheren Ausführen einer mittels eines Kraftfahrzeugs bereitgestellten Funktion, umfassend die folgenden Schritte: Empfangen von Infrastrukturdatensignalen, welche Infrastrukturdaten repräsentieren, welche für eine mittels eines Kraftfahrzeugs bereitgestellte Funktion bestimmt sind, Empfangen von Sicherheitsbedingungssignalen, welche zumindest eine Sicherheitsbedingung repräsentieren, welche erfüllt sein muss, damit die Funktion basierend auf den Infrastrukturdaten ausgeführt werden darf, Prüfen, ob die zumindest eine Sicherheitsbedingung erfüllt ist, Ermitteln, ob die Funktion basierend auf den Infrastrukturdaten ausgeführt werden darf, basierend auf einem Ergebnis des Prüfens, Erzeugen von Ergebnissignalen, welche ein Ergebnis des Ermittelns repräsentieren und Ausgeben der erzeugten Ergebnissignale.

DE 10 2019 218 078 A1 offenbart ein Verfahren an Bord eines Kraftfahrzeugs umfassend Schritte des Erfassens von Bestimmungen eines vorbestimmten Sachverhalts im Umfeld des Kraftfahrzeugs, wobei die Bestimmungen auf der Basis unterschiedlicher Informationsquellen durchgeführt sind; des Wählens einer der Informationsquellen; Bestimmen einer Signifikanz von Bestimmungen auf der Basis der gewählten Informationsquelle; und des Bestimmens des Sachverhalts auf der Basis der erfassten Bestimmungen.

US 7,102,496 B1 offenbart ein Sensorsystem zur Verwendung in einem Fahrzeug, das Sensordaten von mehr als einem Sensor integriert, um die Kollisionsvermeidung und andere Arten der sensorbezogenen Verarbeitung zu erleichtern. Alle Sensordaten können von einem Subsystem zur Bedrohungsbeurteilung innerhalb des Sensorsystems in umfassender Weise integriert werden.

Üblicherweise wird der ASIL einer Funktion während der Entwicklungszeit auf Basis von Annahmen über die "worst case" Situationen bestimmt und fest zugeordnet. Allerdings ist durch Betrachtung der Vielzahl an möglichen Situationen leicht nachvollziehbar, dass die Fehlfunktion einer sicherheitsbezogenen Funktion in vielen dieser Situationen gar nicht gefährlich ist. Das trifft sowohl auf Primärfunktionen wie Aktuatorik-Ansteuerung, z.B. ungewolltes Motor-Aus im Stillstand als auch auf Sekundärfunktionen wie die Umfeldwahrnehmung, z.B. Objekterkennung in fernen Bereichen bei langsamer Fahrt, zu.

Andererseits kann es in der Umfelderkennung aufgrund falscher oder ungenügender Spezifikation von Sicherheitsanforderungen während des Designs auch dazu kommen, dass in spezifischen Situationen Funktionen zur Erzeugung des Umfeldmodells, z.B. Sensor-Abdeckung eines spezifischen Sichtbereichs, mit zu niedriger Sicherheitskritikalität eingestuft und folglich nicht ausreichend sicher bzw. verlässlich ausgeführt werden.

Der Erfindung liegt somit die Aufgabe zugrunde, ein verbessertes Verfahren und Steuergerät zum Bestimmen eines geforderten Sicherheitsintegritätsniveaus sicherheitsbezogener Fahrzeugfunktionen eines eine Mehrzahl sicherheitsbezogener Fahrzeugfunktionen aufweisenden Umfeldmodells bereitzustellen, welche eine situationsbedingte Bestimmung eines Sicherheitsintegritätsniveaus einer sicherheitsbezogenen Fahrzeugfunktion ermöglichen.

Die Aufgabe wird mit einem computerimplementierten Verfahren zum Bestimmen eines geforderten Sicherheitsintegritätsniveaus sicherheitsbezogener Fahrzeugfunktionen eines eine Mehrzahl sicherheitsbezogener Fahrzeugfunktionen aufweisenden Umfeldmodells mit den Merkmalen des Patentanspruchs 1 gelöst.

Darüber hinaus wird die Aufgabe mit einem Steuergerät zum Bestimmen eines geforderten Sicherheitsintegritätsniveaus sicherheitsbezogener Fahrzeugfunktionen eines eine Mehrzahl sicherheitsbezogener Fahrzeugfunktionen aufweisenden Umfeldmodells mit den Merkmalen des Patentanspruchs 13 gelöst.

Ferner wird die Aufgabe mit einem Computerprogramm mit den Merkmalen des Patentanspruchs 14 und einem computerlesbaren Datenträger mit den Merkmalen des Patentanspruchs 15 gelöst.

### Offenbarung der Erfindung

Die vorliegende Erfindung schafft ein computerimplementiertes Verfahren zum Bestimmen eines geforderten Sicherheitsintegritätsniveaus sicherheitsbezogener Fahrzeugfunktionen eines eine Mehrzahl sicherheitsbezogener Fahrzeugfunktionen aufweisenden Umfeldmodells eines Umfelds eines Fahrzeugs.

Das Verfahren umfasst ein Bereitstellen zumindest eines Infrastruktur-Daten repräsentierendes Infrastruktur-Datensignal und zumindest eines Fahrzeugsensor-Daten repräsentierendes Fahrzeugsensor-Datensignal, welche jeweils für die Mehrzahl sicherheitsbezogener Fahrzeugfunktionen bestimmt sind.

Das Verfahren umfasst ferner ein Bestimmen eines Sicherheitsintegritätsniveaus der Mehrzahl sicherheitsbezogener Fahrzeugfunktionen basierend auf den bereitgestellten zumindest einen Infrastruktur-Datensignal und dem zumindest einen Fahrzeugsensor-Datensignal, wobei das zumindest eine Fahrzeugsensor-Datensignal mit einer ersten Gewichtung und das zumindest eine Infrastruktur-Datensignal mit einer zweiten Gewichtung zum Bestimmen des geforderten Sicherheitsintegritätsniveaus der Mehrzahl sicherheitsbezogener Fahrzeugfunktionen beitragen.

Das Sicherheitsintegritätsniveau kann beispielsweise durch eine gewichtete Summe des zumindest einen Fahrzeugsensor-Datensignals und des zumindest einen Fahrzeugsensor-Datensignals berechnet werden.

Das Sicherheitsintegritätsniveaus der Fahrzeugfunktion repräsentiert bzw. beschreibt ein Niveau bzw. ein Level bzw. eine Stufe der Sicherheitsintegrität der Fahrzeugfunktion. Die Sicherheitsintegrität der Fahrzeugfunktion bezeichnet insbesondere eine Zuverlässigkeit der Fahrzeugfunktion, welche bspw. mittels einer Risikobeurteilung ermittelbar ist bzw. ermittelt werden kann.

Die vorliegende Erfindung schafft des Weiteren ein Steuergerät zum Bestimmen eines geforderten Sicherheitsintegritätsniveaus sicherheitsbezogener Fahrzeugfunktionen eines eine Mehrzahl sicherheitsbezogener Fahrzeugfunktionen aufweisenden Umfeldmodells.

Das Steuergerät umfasst erste Mittel zum Bereitstellen zumindest eines Infrastruktur-Daten repräsentierendes Infrastruktur-Datensignal und zumindest eines Fahrzeugsensor-Daten repräsentierendes Fahrzeugsensor-Datensignal, welche jeweils für die Mehrzahl sicherheitsbezogener Fahrzeugfunktionen bestimmt sind.

Darüber hinaus umfasst das Steuergerät zweite Mittel zum Bestimmen eines geforderten Sicherheitsintegritätsniveaus der Mehrzahl sicherheitsbezogener Fahrzeugfunktionen basierend auf den bereitgestellten zumindest einen Infrastruktur-Datensignal und dem zumindest einen Fahrzeugsensor-Datensignal, wobei die zweiten Mittel dazu eingerichtet sind, das zumindest eine Fahrzeugsensor-Datensignal mit einer ersten Gewichtung und das zumindest eine Infrastruktur-Datensignal mit einer zweiten Gewichtung in das Bestimmen des Sicherheitsintegritätsniveaus der Mehrzahl sicherheitsbezogener Fahrzeugfunktionen einfließen zu lassen.

Die vorliegende Erfindung schafft ferner ein Computerprogramm mit Programmcode, um das erfindungsgemäße Verfahren durchzuführen, wenn das Computerprogramm auf einem Computer ausgeführt wird sowie einen computerlesbaren Datenträger mit Programmcode eines Computerprogramms, um das erfindungsgemäße Verfahren durchzuführen, wenn das Computerprogramm auf einem Computer ausgeführt wird.

Üblicherweise wird eine sicherheitsbezogene Funktion durch dediziert dafür mit dem entsprechenden ASIL entwickelte Software und auf dediziert dafür mit dem entsprechenden ASIL entwickelte Hardware umgesetzt. In traditionellen Fahrzeug-E/E-Architekturen bringt es somit auch keine Vorteile, Funktionen dynamisch auf Hardware und mit Software mit unterschiedlichen ASIL umsetzen zu wollen, da die entsprechende Hardware und Software bereits vorhanden sind.

Zukünftige Fahrzeug-E/E-Architekturen werden jedoch stark mit externen Systemen, z.B. Cloud, Edge, anderen Fahrzeugen und/oder Smart Devices vernetzt sein. Das bietet die Möglichkeit, Funktionen nach außen auszulagern. Für diese Auslagerung ist der ASIL einer Funktion allerdings eine Einschränkung, da diese externen Systeme häufig nicht nach einer Sicherheitsnorm wie der ISO 26262 entwickelt wurden und somit auch nicht die notwendige "ASIL-Compliance" bieten.

Eine Idee der vorliegenden Erfindung ist es daher, die relevanten bzw. kritischen und nicht-relevanten bzw. nicht-kritischen Bereiche des Umfeldmodells während des Betriebs nicht nur aus dem Fahrzeug heraus zu bestimmen - direkt oder indirekt über Erkennung des Szenarios -, sondern dass diese auch über lokale Informationen, wie z.B. über eine Verbindung zu einer Cloud, z.B. eine statische und/oder dynamische Karte oder Spatial Computing, zu einem lokalen Edge Server oder zu einer, dedizierten lokalen Sendeeinheit, z.B. ein Retrofit-Gerät an einer Ampel, lokal verfügbar gemacht werden.

Somit kann in vorteilhafter Weise eine Sicherheitskritikalität von Perzeptionsfunktionen in bestimmten Bereichen um ein Ego-Fahrzeug herum an einer geografischen Stelle auf Basis aktueller lokaler Perzeption oder durch statistische Auswertung von historischen lokalen Messdaten lokal besser bestimmt werden.

Durch diese abgesicherten Zusatzinformationen können Fehleinschätzungen durch die Fahrzeug-Sensorik fahrzeugintern korrigiert und damit die Sicherheit erhöht werden. Diese Fehleinschätzungen können sowohl durch eine fehlerhafte Wahrnehmung der Situation durch das Fahrzeug als auch durch eine Fehleinschätzung der überhaupt möglichen kritischen Ereignisse durch den Entwickler verursacht sein.

Damit können also auch Fehler im Design, z.B. das Übersehen von spezifischen Edge und Corner Cases, nachträglich lokal kompensiert und so die Sicherheit erhöht werden. Diese Informationen können umfassend und über einen langen Zeitraum - auch noch während des Betriebs - validiert werden, bevor sie nach außen gegeben werden. Das verbessert die Verlässlichkeit und erleichtert die Sicherheitsargumentation des Gesamtsystems.

Bei hoher Verlässlichkeit der Informationen, z.B. durch Metadaten übermittelt oder anderweitig garantiert, kann das Fahrzeug auch auf Basis der externen Vorgaben die Berechnung des Umfeldmodells, Perzeptionsfunktionen und/oder Teilfunktionen) in Bereichen, die lokal als nicht-sicherheitsrelevant bestimmt wurden, besser umsetzen, indem z.B. weniger Redundanz vorgesehen, Messzyklen ausgesetzt, eine Auflösung reduziert, oder komplett auf eine Erfassung verzichtet wird.

Dadurch werden temporär Ressourcen freigestellt, die für andere Funktionen genutzt werden können. Auch eine mögliche fahrzeuginterne Bestimmung der Echtzeit-Sicherheitsanforderungen könnte durch diesen zweiten, hochverlässlichen Pfad, effizienter umgesetzt oder temporär und/oder lokal, komplett ausgelassen werden, wodurch ebenfalls mindestens temporär Ressourcen freigestellt werden können.

Gemäß einer bevorzugten Weiterbildung ist vorgesehen, dass das zumindest eine Infrastruktur-Datensignal Information darüber aufweist, welche regionalen Bereiche des Umfelds des Fahrzeugs welches Sicherheitsintegritätsniveau aufweisen. Somit kann bestimmt werden, zu welchem Grad die regionalen Bereiche des Umfelds des Fahrzeugs sicherheitskritisch sind.

Gemäß einer weiteren bevorzugten Weiterbildung ist vorgesehen, dass das zumindest einen Infrastruktur-Datensignal Information über statische Hindernisse, eine Verkehrsinfrastruktur und/oder dynamische Objekte aufweist.

Statische Hindernisse können z.B. heruntergefallene Steine neben einem Hang, häufiges Auftreten von Schlaglöchern im Frühling, verlorene Fracht, Fahrräder und/oder Scooter auf der Straße neben einem Fahrrad- bzw. Scooter-Parkplatz, und/oder herunterhängende Äste sein. Dynamische Objekte können z.B. scharf einscherende Fahrzeuge aus einer schlecht einsehbaren Straße, und/oder ein von rechts einmündender Fahrradweg auf einer abschüssigen Straße sein.

Gemäß einer weiteren bevorzugten Weiterbildung ist vorgesehen, dass das zumindest eine Infrastruktur-Datensignal Information über eine Art von, mit einer vorgegebenen Wahrscheinlichkeit in regionalen Bereichen des Umfelds des Fahrzeugs auftretenden, Objekten und einer Art von, mit einer vorgegebenen Wahrscheinlichkeit in regionalen Bereichen des Umfelds des Fahrzeugs nicht auftretenden Objekten, aufweisen.

Häufig auftretende Objekte können z.B. LKWs aus einer Einfahrt in ein Firmengelände, Motorradfahrer am Wochenende, Kinder vor einer Schule, und/oder verkleidete Personen in der Nähe eines Faschingsumzugs sein. Nicht häufig auftretende Objekte können z.B. Fußgänger aus einem für Personen nicht zugänglichen Bereich, insbesondere aufgrund eines Zutrittsverbots und/oder physikalisch nicht erreichbare Orte oder überquerbaren Mauern oder Zäunen sein.

Gemäß einer weiteren bevorzugten Weiterbildung ist vorgesehen, dass das zumindest eine Infrastruktur-Datensignal Information über eine Verkehrsdichte, eine Uhrzeit, Wetter, Lichtverhältnisse, und/oder einen Sonnenstand aufweisen. Somit können diese Gegebenheiten mit in die Bestimmung des Sicherheitsintegritätsniveaus einbezogen werden.

Gemäß einer weiteren bevorzugten Weiterbildung ist vorgesehen, dass basierend auf dem bestimmten Sicherheitsintegritätsniveau der Mehrzahl sicherheitsbezogener Fahrzeugfunktionen Daten, insbesondere ein Steuersignal zum Ansteuern zumindest eines Fahrzeugsensors, erzeugt werden, die repräsentieren, mit welchen Sensor-Modalitäten, insbesondere Video, Radar, Lidar, Ultraschall und/oder Mikrofon, regionale Bereiche des Umfelds des Fahrzeugs durch Fahrzeugsensoren abzudecken sind. Dadurch kann in vorteilhafter Weise eine Verbesserung des Sicherheitsintegritätsniveaus der Mehrzahl sicherheitsbezogener Fahrzeugfunktionen erreicht werden.

Gemäß einer weiteren bevorzugten Weiterbildung ist vorgesehen, dass basierend auf dem bestimmten Sicherheitsintegritätsniveau der Mehrzahl sicherheitsbezogener Fahrzeugfunktionen erste Daten, insbesondere ein Steuersignal zum Ansteuern zumindest eines Fahrzeugsensors, erzeugt werden, die repräsentieren, mit welcher Sensor-Redundanz, Sensor-Auflösung und/oder Sensor-Messfrequenz regionale Bereiche des Umfelds des Fahrzeugs abzudecken sind. Dies gewährleistet eine exaktere Sensor Erfassung eines Szenarios durch die sicherheitsbezogene Fahrzeugfunktion.

Gemäß einer weiteren bevorzugten Weiterbildung ist vorgesehen, dass basierend auf dem bestimmten Sicherheitsintegritätsniveau der Mehrzahl sicherheitsbezogener Fahrzeugfunktionen zweite Daten, insbesondere ein Steuersignal, zur Gewichtung von Perzeptionsfunktionen, Objektmodellen und/oder Bewegungsmodellen betreffend Ihre Eignung zur Erfassung eines Fahrzeugumfelds erzeugt werden. Dies kann insbesondere dann durchgeführt werden, falls unterschiedliche Varianten für eine Perzeptionsfunktion verfügbar sind.

Gemäß einer weiteren bevorzugten Weiterbildung ist vorgesehen, dass basierend auf dem bestimmten Sicherheitsintegritätsniveau der Mehrzahl sicherheitsbezogener Fahrzeugfunktionen dritte Daten, insbesondere ein Steuersignal, zur Auswahl einer Algorithmusart, insbesondere eines Kalman-Filters oder eines Deep-Learning-basierten Algorithmus erzeugt werden. Somit kann jeweils ein für die entsprechende Situation optimaler Algorithmus eingesetzt werden.

Gemäß einer weiteren bevorzugten Weiterbildung ist vorgesehen, dass basierend auf dem bestimmten Sicherheitsintegritätsniveau der Mehrzahl sicherheitsbezogener Fahrzeugfunktionen vierte Daten, insbesondere ein Steuersignal, zum Einstellen zumindest eines Grenzwertes eines Objektdetektors erzeugt werden. Dadurch kann eine fehlerhafter Objektdetektion in vorteilhafter Weise reduziert werden.

Gemäß einer weiteren bevorzugten Weiterbildung ist vorgesehen, dass basierend auf dem bestimmten Sicherheitsintegritätsniveau der Mehrzahl sicherheitsbezogener Fahrzeugfunktionen fünfte Daten, insbesondere ein Steuersignal, zur Auswahl eines Steuergerätes, insbesondere zur Durchführung der sicherheitsbezogenen Fahrzeugfunktionen, erzeugt werden. Dies kann durchgeführt werden, falls mehrere Systeme oder Steuergeräte für die gleiche Perzeptionsfunktion verfügbar sind.

Gemäß einer weiteren bevorzugten Weiterbildung ist vorgesehen, dass das zumindest eine Infrastruktur-Datensignal vor oder bei Durchfahren eines durch Fahrzeugsensoren erfassten Streckenabschnitts bereitgestellt werden. Somit kann das zumindest eine bereitgestellte Infrastruktur-Datensignal die Bestimmung des Sicherheitsintegritätsniveaus der Mehrzahl sicherheitsbezogener Fahrzeugfunktionen unterstützen.

Die beschriebenen Ausgestaltungen und Weiterbildungen lassen sich beliebig miteinander kombinieren.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung.

### Kurze Beschreibung der Zeichnungen

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt.

Es zeigen:
- Fig. 1: ein Ablaufdiagramm eines computerimplementierten Verfahrens zum Bestimmen eines geforderten Sicherheitsintegritätsniveaus einer sicherheitsbezogenen Fahrzeugfunktion eines Kraftfahrzeugs gemäß einer bevorzugten Ausführungsform der Erfindung; und
- Fig. 2: eine schematische Darstellung eines Steuergerätes zum Bestimmen eines geforderten Sicherheitsintegritätsniveaus einer sicherheitsbezogenen Fahrzeugfunktion eines Kraftfahrzeugs gemäß der bevorzugten Ausführungsform der Erfindung.

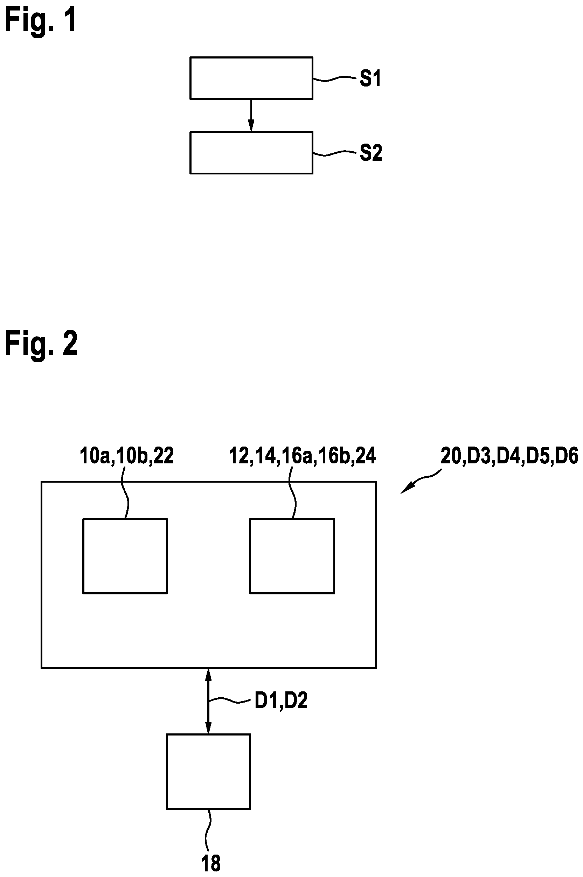

Das ist Fig. 1 gezeigte computerimplementierte Verfahren zum Bestimmen eines geforderten Sicherheitsintegritätsniveaus 14 sicherheitsbezogener Fahrzeugfunktionen 12 eines eine Mehrzahl sicherheitsbezogener Fahrzeugfunktionen 12 aufweisenden Umfeldmodells eines Umfelds eines Fahrzeugs.

Das Verfahren umfasst ein Bereitstellen S1 zumindest eines Infrastruktur-Daten repräsentierendes Infrastruktur-Datensignal 10a und zumindest eines Fahrzeugsensor-Daten repräsentierendes Fahrzeugsensor-Datensignal 10b, welche jeweils für die Mehrzahl sicherheitsbezogener Fahrzeugfunktionen 12 bestimmt sind.

Ferner umfasst das Verfahren ein Bestimmen S2 eines Sicherheitsintegritätsniveaus 14 der Mehrzahl sicherheitsbezogener Fahrzeugfunktionen 12 basierend auf dem bereitgestellten zumindest einen Infrastruktur-Datensignal 10a und dem zumindest einen Fahrzeugsensor-Datensignal 10b, wobei das zumindest eine Fahrzeugsensor-Datensignal 10b mit einer ersten Gewichtung 16a und das zumindest eine Infrastruktur-Datensignal 10a mit einer zweiten Gewichtung 16b in das Bestimmen des Sicherheitsintegritätsniveaus 14 der Mehrzahl sicherheitsbezogener Fahrzeugfunktionen 12 einfließen.

Das zumindest eine Infrastruktur-Datensignal 10a Information weisen ferner Informationen darüber auf, welche regionalen Bereiche welches Sicherheitsintegritätsniveau 14 aufweisen. Des Weiteren weisen das zumindest eine Infrastruktur-Datensignal 10a Information über statische Hindernisse, eine Verkehrsinfrastruktur und/oder dynamische Objekte auf. Das zumindest eine Infrastruktur-Datensignal 10a weisen darüber hinaus Information über eine Art von mit einer vorgegebenen Wahrscheinlichkeit in regionalen Bereichen auftretenden Objekten und einer Art von mit einer vorgegebenen Wahrscheinlichkeit in regionalen Bereichen nicht auftretenden Objekten auf. Zusätzlich weisen das zumindest eine Infrastruktur-Datensignal 10a Information über eine Verkehrsdichte, eine Uhrzeit, Wetter, Lichtverhältnisse, und/oder einen Sonnenstand auf.

Basierend auf dem bestimmten Sicherheitsintegritätsniveau 14 der Mehrzahl sicherheitsbezogener Fahrzeugfunktionen 12 werden erste Daten D1, insbesondere ein Steuersignal zum Ansteuern zumindest eines Fahrzeugsensors 18, erzeugt, die repräsentieren, mit welchen Sensor-Modalitäten, insbesondere Video, Radar, Lidar, Ultraschall und/oder Mikrofon, regionale Bereiche des Umfelds des Fahrzeugs durch Fahrzeugsensoren 18 abzudecken sind.

Ferner werden basierend auf dem bestimmten Sicherheitsintegritätsniveau 14 der Mehrzahl sicherheitsbezogener Fahrzeugfunktionen 12 zweite Daten D2, insbesondere ein Steuersignal zum Ansteuern zumindest eines Fahrzeugsensors 18, erzeugt, die repräsentieren, mit welcher Sensor-Redundanz, Sensor-Auflösung und/oder Sensor-Messfrequenz regionale Bereiche des Umfelds des Fahrzeugs abzudecken sind.

Des Weiteren werden basierend auf dem bestimmten Sicherheitsintegritätsniveau 14 der Mehrzahl sicherheitsbezogener Fahrzeugfunktionen 12 dritte Daten D3, insbesondere ein Steuersignal, zur Gewichtung von Perzeptionsfunktionen, Objektmodellen und/oder Bewegungsmodellen betreffend Ihre Eignung zur Erfassung eines Fahrzeugumfelds erzeugt.

Darüber hinaus werden basierend auf dem bestimmten Sicherheitsintegritätsniveau 14 der Mehrzahl sicherheitsbezogener Fahrzeugfunktionen 12 vierte Daten D4, insbesondere ein Steuersignal, zur Auswahl einer Algorithmusart, insbesondere eines Kalman-Filters oder eines Deep-Learning-basierten Algorithmus erzeugt.

Basierend auf dem bestimmten Sicherheitsintegritätsniveau 14 der Mehrzahl sicherheitsbezogener Fahrzeugfunktionen 12 werden überdies fünfte Daten D5, insbesondere ein Steuersignal, zum Einstellen zumindest eines Grenzwertes eines Objektdetektors erzeugt. Des Weiteren werden basierend auf dem bestimmten Sicherheitsintegritätsniveau 14 der Mehrzahl sicherheitsbezogener Fahrzeugfunktionen 12 sechste Daten D6, insbesondere ein Steuersignal, zur Auswahl eines Steuergerätes, insbesondere zur Durchführung der sicherheitsbezogenen Fahrzeugfunktionen 12, erzeugt. Das zumindest eine Infrastruktur-Datensignal 10a werden ferner entweder vor oder bei Durchfahren eines durch Fahrzeugsensoren 18 erfassten Streckenabschnitts bereitgestellt.

Fig. 2 zeigt eine schematische Darstellung eines Steuergerätes zum Bestimmen eines geforderten Sicherheitsintegritätsniveaus 14 einer sicherheitsbezogenen Fahrzeugfunktion 12 eines Kraftfahrzeugs gemäß der bevorzugten Ausführungsform der Erfindung.

Das Steuergerät 20 umfasst erste Mittel 22 zum Bereitstellen zumindest eines Infrastruktur-Daten repräsentierendes Infrastruktur-Datensignal 10a und zumindest eines Fahrzeugsensor-Daten repräsentierendes Fahrzeugsensor-Datensignal 10b, welche jeweils für die Mehrzahl sicherheitsbezogener Fahrzeugfunktionen 12 bestimmt sind.

Des Weiteren umfasst das Steuergerät 20 zweite Mittel 24 zum Bestimmen eines geforderten Sicherheitsintegritätsniveaus 14 der Mehrzahl sicherheitsbezogener Fahrzeugfunktionen 12 basierend auf dem bereitgestellten zumindest einen Infrastruktur-Datensignal 10a und dem zumindest einen Fahrzeugsensor-Datensignal 10b, wobei die zweiten Mittel 24 dazu eingerichtet sind, das zumindest eine Fahrzeugsensor-Datensignal 10b mit einer ersten Gewichtung 16a und das zumindest eine Infrastruktur-Datensignal 10a mit einer zweiten Gewichtung 16b in das Bestimmen des Sicherheitsintegritätsniveaus 14 der Mehrzahl sicherheitsbezogener Fahrzeugfunktionen 12 einfließen zu lassen.

## Patentansprüche

1. Computerimplementiertes Verfahren zum Bestimmen eines geforderten Sicherheitsintegritätsniveaus (14) sicherheitsbezogener Fahrzeugfunktionen (12) eines eine Mehrzahl sicherheitsbezogener Fahrzeugfunktionen (12) aufweisenden Umfeldmodells eines Umfelds eines Fahrzeugs, mit den Schritten:
Bereitstellen (S1) zumindest eines Infrastruktur-Daten repräsentierendes Infrastruktur-Datensignal (10a) und zumindest eines Fahrzeugsensor-Daten repräsentierendes Fahrzeugsensor-Datensignal (10b), welche jeweils für die Mehrzahl sicherheitsbezogener Fahrzeugfunktionen (12) bestimmt sind; und
Bestimmen (S2) eines Sicherheitsintegritätsniveaus (14) der Mehrzahl sicherheitsbezogener Fahrzeugfunktionen (12) basierend auf dem bereitgestellten, zumindest einen Infrastruktur-Datensignal (10a) und dem zumindest einen Fahrzeugsensor-Datensignal (10b), wobei das Fahrzeugsensor-Datensignal (10b) mit einer ersten Gewichtung (16a) und das Infrastruktur-Datensignal (10a) mit einer zweiten Gewichtung (16b) zum Bestimmen des geforderten Sicherheitsintegritätsniveaus (14) der Mehrzahl sicherheitsbezogener Fahrzeugfunktionen (12) beitragen.

2. Computerimplementiertes Verfahren nach Anspruch 1, wobei das zumindest eine Infrastruktur-Datensignal (10a) Information darüber aufweist, welche regionalen Bereiche des Umfelds des Fahrzeugs welches Sicherheitsintegritätsniveau (14) aufweisen.

3. Computerimplementiertes Verfahren nach Anspruch 1 oder 2, wobei das zumindest eine Infrastruktur-Datensignal (10a) Information über statische Hindernisse, eine Verkehrsinfrastruktur und/oder dynamische Objekte aufweist.

4. Computerimplementiertes Verfahren nach einem der vorhergehenden Ansprüche, wobei das zumindest eine Infrastruktur-Datensignal (10a) Information über eine Art von mit einer vorgegebenen Wahrscheinlichkeit in regionalen Bereichen des Umfelds des Fahrzeugs auftretenden Objekten und einer Art von mit einer vorgegebenen Wahrscheinlichkeit in regionalen Bereichen des Umfelds des Fahrzeugs nicht auftretenden Objekten aufweist.

5. Computerimplementiertes Verfahren nach einem der vorhergehenden Ansprüche, wobei das zumindest eine Infrastruktur-Datensignal (10a) Information über eine Verkehrsdichte, eine Uhrzeit, Wetter, Lichtverhältnisse, und/oder einen Sonnenstand aufweist.

6. Computerimplementiertes Verfahren nach einem der vorhergehenden Ansprüche, wobei basierend auf dem bestimmten Sicherheitsintegritätsniveau (14) der Mehrzahl sicherheitsbezogener Fahrzeugfunktionen (12) erste Daten (D1), insbesondere ein Steuersignal zum Ansteuern zumindest eines Fahrzeugsensors (18), erzeugt werden, die repräsentieren, mit welchen Sensor-Modalitäten, insbesondere Video, Radar, Lidar, Ultraschall und/oder Mikrofon, regionale Bereiche des Umfelds des Fahrzeugs durch Fahrzeugsensoren (18) abzudecken sind.

7. Computerimplementiertes Verfahren nach einem der vorhergehenden Ansprüche, wobei basierend auf dem bestimmten Sicherheitsintegritätsniveau (14) der Mehrzahl sicherheitsbezogener Fahrzeugfunktionen (12) zweite Daten (D2), insbesondere ein Steuersignal zum Ansteuern zumindest eines Fahrzeugsensors (18), erzeugt werden, die repräsentieren, mit welcher Sensor-Redundanz, Sensor-Auflösung und/oder Sensor-Messfrequenz regionale Bereiche des Umfelds des Fahrzeugs abzudecken sind.

8. Computerimplementiertes Verfahren nach einem der vorhergehenden Ansprüche, wobei basierend auf dem bestimmten Sicherheitsintegritätsniveau (14) der Mehrzahl sicherheitsbezogener Fahrzeugfunktionen (12) dritte Daten (D3), insbesondere ein Steuersignal, zur Gewichtung von Perzeptionsfunktionen, Objektmodellen und/oder Bewegungsmodellen betreffend Ihre Eignung zur Erfassung eines Fahrzeugumfelds erzeugt werden.

9. Computerimplementiertes Verfahren nach einem der vorhergehenden Ansprüche, wobei basierend auf dem bestimmten Sicherheitsintegritätsniveau (14) der Mehrzahl sicherheitsbezogener Fahrzeugfunktionen (12) vierte Daten (D4), insbesondere ein Steuersignal, zur Auswahl einer Algorithmusart, insbesondere eines Kalman-Filters oder eines Deep-Learning-basierten Algorithmus erzeugt werden.

10. Computerimplementiertes Verfahren nach einem der vorhergehenden Ansprüche, wobei basierend auf dem bestimmten Sicherheitsintegritätsniveau (14) der Mehrzahl sicherheitsbezogener Fahrzeugfunktionen (12) fünfte Daten (D5), insbesondere ein Steuersignal, zum Einstellen zumindest eines Grenzwertes eines Objektdetektors erzeugt werden.

11. Computerimplementiertes Verfahren nach einem der vorhergehenden Ansprüche, wobei basierend auf dem bestimmten Sicherheitsintegritätsniveau (14) der Mehrzahl sicherheitsbezogener Fahrzeugfunktionen (12) sechste Daten (D6), insbesondere ein Steuersignal, zur Auswahl eines Steuergerätes, insbesondere zur Durchführung der sicherheitsbezogenen Fahrzeugfunktionen (12), erzeugt werden.

12. Computerimplementiertes Verfahren nach einem der vorhergehenden Ansprüche, wobei das zumindest eine Infrastruktur-Datensignal (10a) vor oder bei Durchfahren eines durch Fahrzeugsensoren (18) erfassten Streckenabschnitts bereitgestellt werden.

13. Steuergerät (20) zum Bestimmen eines geforderten Sicherheitsintegritätsniveaus (14) sicherheitsbezogener Fahrzeugfunktionen (12) eines eine Mehrzahl sicherheitsbezogener Fahrzeugfunktionen (12) aufweisenden Umfeldmodells eines Umfelds eines Fahrzeugs, mit:
ersten Mitteln (22) zum Bereitstellen zumindest eines Infrastruktur-Daten repräsentierendes Infrastruktur-Datensignal (10a) und zumindest eines Fahrzeugsensor-Daten repräsentierendes Fahrzeugsensor-Datensignal (10b), welche jeweils für die Mehrzahl sicherheitsbezogener Fahrzeugfunktionen (12) bestimmt sind; und
zweiten Mitteln (24) zum Bestimmen (S2) eines Sicherheitsintegritätsniveaus (14) der Mehrzahl sicherheitsbezogener Fahrzeugfunktionen (12) basierend auf dem bereitgestellten zumindest einen Infrastruktur-Datensignal (10a) und dem zumindest einen Fahrzeugsensor-Datensignal (10b), wobei die zweiten Mittel (24) dazu eingerichtet sind, das zumindest eine Fahrzeugsensor-Datensignal (10b) mit einer ersten Gewichtung (16a) und das zumindest eine Infrastruktur-Datensignal (10a) mit einer zweiten Gewichtung (16b) zum Bestimmen des geforderten Sicherheitsintegritätsniveaus (14) der Mehrzahl sicherheitsbezogener Fahrzeugfunktionen (12) einzubeziehen.

14. Computerprogramm mit Programmcode, um das Verfahren nach einem der Ansprüche 1 bis 12 durchzuführen, wenn das Computerprogramm auf einem Computer ausgeführt wird.

15. Computerlesbarer Datenträger mit Programmcode eines Computerprogramms, um das Verfahren nach einem der Ansprüche 1 bis 12 durchzuführen, wenn das Computerprogramm auf einem Computer ausgeführt wird.

## Claims

1. Computer-implemented method for determining a required safety integrity level (14) of safety-related vehicle functions (12) of an environmental model of an environment of a vehicle comprising a plurality of safety-related vehicle functions (12), comprising the steps of:
providing (S1) at least one infrastructure data signal (10a) representing infrastructure data and at least one vehicle sensor data signal (10b) representing vehicle sensor data, each of which is intended for the plurality of safety-related vehicle functions (12); and
determining (S2) a safety integrity level (14) of the plurality of safety-related vehicle functions (12) based on the provided at least one infrastructure data signal (10a) and the at least one vehicle sensor data signal (10b), wherein the vehicle sensor data signal (10b) with a first weighting (16a) and the infrastructure data signal (10a) with a second weighting (16b) contribute to determining the required safety integrity level (14) of the plurality of safety-related vehicle functions (12).

2. Computer-implemented method according to Claim 1, wherein the at least one infrastructure data signal (10a) has information about which regional areas of the environment of the vehicle have which safety integrity level (14).

3. Computer-implemented method according to Claim 1 or 2, wherein the at least one infrastructure data signal (10a) has information about static obstacles, a traffic infrastructure and/or dynamic objects.

4. Computer-implemented method according to one of the preceding claims, wherein the at least one infrastructure data signal (10a) has information about a type of objects occurring with a predefined probability in regional areas of the environment of the vehicle and a type of objects not occurring with a predefined probability in regional areas of the environment of the vehicle.

5. Computer-implemented method according to one of the preceding claims, wherein the at least one infrastructure data signal (10a) has information about a traffic density, a time, weather, light conditions, and/or a position of the sun.

6. Computer-implemented method according to one of the preceding claims, wherein, based on the determined safety integrity level (14) of the plurality of safety-related vehicle functions (12), first data (D1), in particular a control signal for controlling at least one vehicle sensor (18), are generated and represent the sensor modalities, in particular video, radar, lidar, ultrasound and/or microphone, with which regional areas of the environment of the vehicle must be covered by vehicle sensors (18).

7. Computer-implemented method according to one of the preceding claims, wherein, based on the determined safety integrity level (14) of the plurality of safety-related vehicle functions (12), second data (D2), in particular a control signal for controlling at least one vehicle sensor (18), are generated and represent the sensor redundancy, sensor resolution and/or sensor measurement frequency with which regional areas of the environment of the vehicle must be covered.

8. Computer-implemented method according to one of the preceding claims, wherein, based on the determined safety integrity level (14) of the plurality of safety-related vehicle functions (12), third data (D3), in particular a control signal, for weighting perception functions, object models and/or motion models regarding their suitability for capturing a vehicle environment are generated.

9. Computer-implemented method according to one of the preceding claims, wherein, based on the determined safety integrity level (14) of the plurality of safety-related vehicle functions (12), fourth data (D4), in particular a control signal, for selecting an algorithm type, in particular a Kalman filter or a deep-learning-based algorithm, are generated.

10. Computer-implemented method according to one of the preceding claims, wherein, based on the determined safety integrity level (14) of the plurality of safety-related vehicle functions (12), fifth data (D5), in particular a control signal, for setting at least one limit value of an object detector are generated.

11. Computer-implemented method according to one of the preceding claims, wherein, based on the determined safety integrity level (14) of the plurality of safety-related vehicle functions (12), sixth data (D6), in particular a control signal, for selecting a control device, in particular for carrying out the safety-related vehicle functions (12), are generated.

12. Computer-implemented method according to one of the preceding claims, wherein the at least one infrastructure data signal (10a) is provided before or when driving through a route section captured by vehicle sensors (18).

13. Control device (20) for determining a required safety integrity level (14) of safety-related vehicle functions (12) of an environmental model of an environment of a vehicle comprising a plurality of safety-related vehicle functions (12), comprising:
first means (22) for providing at least one infrastructure data signal (10a) representing infrastructure data and at least one vehicle sensor data signal (10b) representing vehicle sensor data, each of which is intended for the plurality of safety-related vehicle functions (12); and
second means (24) for determining (S2) a safety integrity level (14) of the plurality of safety-related vehicle functions (12) based on the provided at least one infrastructure data signal (10a) and the at least one vehicle sensor data signal (10b), wherein the second means (24) are configured to incorporate the at least one vehicle sensor data signal (10b) with a first weighting (16a) and the at least one infrastructure data signal (10a) with a second weighting (16b) for determining the required safety integrity level (14) of the plurality of safety-related vehicle functions (12).

14. Computer program comprising program code for carrying out the method according to one of Claims 1 to 12 when the computer program is executed on a computer.

15. Computer-readable data carrier comprising program code of a computer program for carrying out the method according to one of Claims 1 to 12 when the computer program is executed on a computer.

## Revendications

1. Procédé mis en œuvre par ordinateur pour déterminer un niveau d'intégrité de sécurité (14) requis de fonctions de véhicule liées à la sécurité (12) d'un modèle d'environnement d'un environnement d'un véhicule comportant une multitude de fonctions de véhicule liées à la sécurité (12), avec les étapes :
fourniture (S1) d'au moins un signal de données d'infrastructure (10a) représentant des données d'infrastructure et d'au moins un signal de données de capteur de véhicule (10b) représentant des données de capteur de véhicule, qui sont chacun déterminés pour la multitude de fonctions de véhicule liées à la sécurité (12) ; et
détermination (S2) d'un niveau d'intégrité de sécurité (14) de la multitude de fonctions de véhicule liées à la sécurité (12) sur la base de l'au moins un signal de données d'infrastructure (10a) fourni et de l'au moins un signal de données de capteur de véhicule (10b), le signal de données de capteur de véhicule (10b) avec une première pondération (16a) et le signal de données d'infrastructure (10a) avec une deuxième pondération (16b) contribuant à déterminer le niveau d'intégrité de sécurité (14) requis de la multitude de fonctions de véhicule liées à la sécurité (12).

2. Procédé mis en œuvre par ordinateur selon la revendication 1, l'au moins un signal de données d'infrastructure (10a) comportant des informations sur quelles zones régionales de l'environnement du véhicule comportent quel niveau d'intégrité de sécurité (14).

3. Procédé mis en œuvre par ordinateur selon la revendication 1 ou 2, l'au moins un signal de données d'infrastructure (10a) comportant des informations sur des obstacles statiques, une infrastructure de trafic et/ou des objets dynamiques.

4. Procédé mis en œuvre par ordinateur selon l'une des revendications précédentes, l'au moins un signal de données d'infrastructure (10a) comportant des informations sur un type d'objets apparaissant avec une probabilité prédéfinie dans des zones régionales de l'environnement du véhicule et un type d'objets n'apparaissant pas avec une probabilité prédéfinie dans des zones régionales de l'environnement du véhicule.

5. Procédé mis en œuvre par ordinateur selon l'une des revendications précédentes, l'au moins un signal de données d'infrastructure (10a) comportant des informations sur une densité de trafic, un temps, des conditions météorologiques, des conditions de lumière et/ou une position du soleil.

6. Procédé mis en œuvre par ordinateur selon l'une des revendications précédentes, des premières données (D1), en particulier un signal de commande pour piloter au moins un capteur de véhicule (18), lesquelles représentent les modalités de détection, en particulier vidéo, radar, lidar, à ultrasons et/ou à microphone, avec lesquelles des zones régionales de l'environnement du véhicule doivent être couvertes par des capteurs de véhicule (18), étant générées sur la base du niveau d'intégrité de sécurité (14) déterminé de la multitude de fonctions de véhicule liées à la sécurité (12).

7. Procédé mis en œuvre par ordinateur selon l'une des revendications précédentes, des deuxièmes données (D2), en particulier un signal de commande pour piloter au moins un capteur de véhicule (18), lesquelles représentent la redondance de capteur, la résolution de capteur et/ou la fréquence de mesure de capteur avec lesquelles des zones régionales de l'environnement du véhicule doivent être couvertes, étant générées sur la base du niveau d'intégrité de sécurité (14) déterminé de la multitude de fonctions de véhicule liées à la sécurité (12).

8. Procédé mis en œuvre par ordinateur selon l'une des revendications précédentes, des troisièmes données (D3), en particulier un signal de commande, étant générées pour pondérer des fonctions de perception, des modèles d'objets et/ou des modèles de déplacement concernant leur aptitude à détecter un environnement de véhicule sur la base du niveau d'intégrité de sécurité (14) déterminé de la multitude de fonctions de véhicule liées à la sécurité (12).

9. Procédé mis en œuvre par ordinateur selon l'une des revendications précédentes, des quatrièmes données (D4), en particulier un signal de commande, étant générées pour la sélection d'un type d'algorithme, en particulier d'un filtre de Kalman ou d'un algorithme basé sur l'apprentissage profond, sur la base du niveau d'intégrité de sécurité (14) déterminé de la multitude de fonctions de véhicule liées à la sécurité (12).

10. Procédé mis en œuvre par ordinateur selon l'une des revendications précédentes, des cinquièmes données (D5), en particulier un signal de commande, étant générées pour le réglage d'au moins une valeur limite d'un détecteur d'objet sur la base du niveau d'intégrité de sécurité (14) déterminé de la multitude de fonctions de véhicule liées à la sécurité (12).

11. Procédé mis en œuvre par ordinateur selon l'une des revendications précédentes, des sixièmes données (D6), en particulier un signal de commande, étant générées pour la sélection d'un appareil de commande, en particulier pour l'exécution des fonctions de véhicule liées à la sécurité (12), sur la base du niveau d'intégrité de sécurité (14) déterminé de la multitude de fonctions de véhicule liées à la sécurité (12).

12. Procédé mis en œuvre par ordinateur selon l'une des revendications précédentes, l'au moins un signal de données d'infrastructure (10a) étant fourni avant ou lors du passage sur un tronçon d'itinéraire détecté par des capteurs de véhicule (18).

13. Appareil de commande (20) pour déterminer un niveau d'intégrité de sécurité (14) requis de fonctions de véhicule liées à la sécurité (12) d'un modèle d'environnement d'un environnement d'un véhicule comportant une multitude de fonctions de véhicule liées à la sécurité (12), avec :
des premiers moyens (22) pour fournir au moins un signal de données d'infrastructure (10a) représentant des données d'infrastructure et au moins un signal de données de capteur de véhicule (10b) représentant des données de capteur de véhicule, qui sont chacun déterminés pour la multitude de fonctions de véhicule liées à la sécurité (12) ; et
des deuxièmes moyens (24) pour déterminer (S2) un niveau d'intégrité de sécurité (14) de la multitude de fonctions de véhicule liées à la sécurité (12) sur la base de l'au moins un signal de données d'infrastructure (10a) fourni et de l'au moins un signal de données de capteur de véhicule (10b), les deuxièmes moyens (24) étant mis au point pour intégrer l'au moins un signal de données de capteur de véhicule (10b) avec une première pondération (16A) et l'au moins un signal de données d'infrastructure (10a) avec une deuxième pondération (16b) pour déterminer le niveau d'intégrité de sécurité (14) requis de la multitude de fonctions de véhicule liées à la sécurité (12).

14. Programme informatique avec un code de programme pour effectuer le procédé selon l'une des revendications 1 à 12 lorsque le programme informatique est exécuté sur un ordinateur.

15. Support de données lisible par ordinateur avec un code de programme pour effectuer le procédé selon l'une des revendications 1 à 12 lorsque le programme informatique est exécuté sur un ordinateur.
